# EUROPÄISCHE PATENTSCHRIFT

(11) **EP 3 017 570 B1**
(45) Veröffentlichungstag und Bekanntmachung des Hinweises auf die Patenterteilung: **08.03.2017**
(21) Anmeldenummer: 13736521.9
(22) Anmeldetag: 01.07.2013
(51) Int. Cl.: H04L 12/735

(54) **STEUERUNGSVORRICHTUNG, NETZWERKKNOTEN UND VERFAHREN ZUM AUSTAUSCH VON DATEN ÜBER EIN DATENNETZ**
CONTROL DEVICE, NETWORK NODE AND METHOD FOR THE EXCHANGE OF DATA OVER A NETWORK
DISPOSITIF DE CONTROLE, NOEUD DE RESEAU ET PROCEDE POUR L'ECHANGE DES DONNEES SUR UN RESEAU

(43) Veröffentlichungstag der Anmeldung: 11.05.2016
(73) Patentinhaber: Siemens Aktiengesellschaft, 80333 München (DE)
(72) Erfinder: GÖTZ, Franz-Josef, 91180 Heideck (DE)
(86) Internationale Anmeldenummer: PCT/EP2013/063780
(87) Internationale Veröffentlichungsnummer: WO 2015/000498

(56) Entgegenhaltungen:
- EP-A1- 2 568 673
- US-A1- 2009 245 136
- US-A1- 2012 213 079

## Beschreibung

Die Erfindung betrifft eine Steuerungsvorrichtung.

Außerdem betrifft die Erfindung einen Netzwerkknoten. Der Netzwerkknoten kann zum Aufbau eines Datennetzes (beispielsweise für Automations-, Medizin-, Transport- oder Verkehrsanwendungen) verwendet werden. Für Netzwerkknoten sind auch die Bezeichnungen Netzknoten und Datennetz-Knoten üblich. Ein Datennetz kann als (digitales) Nachrichtennetz angesehen werden.

Darüberhinaus betrifft die Erfindung ein Verfahren zum Austausch von Daten über ein Datennetz, an dem eine erste und eine zweite Datenendeinrichtung angeschlossen ist, wobei das Datennetz eine Vielzahl von Netzwerkknoten aufweist und Netzwerkknoten einer Vielzahl von Paaren der Netzwerkknoten jeweils mittels mindestens einer Übertragungsstrecke verbunden sind. Daten, welche über das Datennetz ausgetauscht werden, können auch als Nachrichten bezeichnet werden. Die Daten werden üblicherweise paketweise, also in Datenpaketen übertragen, die auch als Telegramme oder Datentelegramme bezeichnet werden.

Die EP 2 568 673 A1 beschreibt ein Netzwerk mit zwei redundanten Pfaden zwischen zwei Netzwerkknoten. Die beiden Pfade sind eigenständig, d.h. sie haben nur Sende-/Quellknoten und Empfangs-/Zielknoten gemeinsam, aber keinen der Zwischenknoten oder der Verbindungen zwischen diesen Endknoten. Jedes Datenpaket wird bei dem Sendeknoten dupliziert, wobei ein erstes Datenpaket entlang eines ersten Pfads und ein zweites redundantes Datenpaket über den zweiten Pfad übertragen wird.

Die US 2009/245136 A1 beschreibt eine Berücksichtigung von Bandbreiteninformation, die eine Bandbreite anzeigt, die zwischen wenigstens zwei Knoten reserviert werden kann.

Die US 2012/213079 A1 beschreibt ein Verfahren zum Auswählen und Bereitstellen von schnittpunktfreien, kürzesten, disjunkten Pfaden. Unter anderem wird vorgeschlagen, einen maximalen Datenfluss im Netzwerk zu ermitteln und einen Betrag für einen mindestens verbleibenden Datenfluss für einen komplementären Pfad des Netzwerks zu berechnen und einen schnittpunktfreien, kürzesten Pfad auszuwählen, in dem der minimal verbleibende Fluss des komplementären Teils des Netzwerks besteht.

Zur Verbesserung einer Verfügbarkeit von Anlagen (beispielsweise von Industrieanlagen) werden Anlagenteile redundant aufgebaut. Solche Anlagen können voraussetzen, dass eine vorübergehende Unterbrechung einer Datenübertragung infolge einer technischen Störung einer einzelnen Netzkomponente (single point of failure) maximal so lange andauert, wie ein Verarbeitungszyklus einer Steuerungsanwendung der Anlage. Die Dauer eines Verarbeitungszyklus ist typischerweise kürzer als 1 ms. Es wird zwischen Medienredundanz und Systemredundanz unterschieden. Um Medienredundanz sicherzustellen, werden Schicht-2-Datennetze (Layer-2-Datennetze) parallel aufgebaut oder Ringstrukturen verwendet.

Für jede der beiden medienredundanten Topologien wurden in dem internationalen Standard IEC 62439-3, Industrial communication networks - High availability automation networks - Part 3: Parallel Redundancy Protocol (PRP) and High-availability Seamless Redundancy (HSR), je ein Protokoll genormt. Das Parallel Redundancy Protocol (PRP) unterstützt parallele Datennetze. Das High-availability Seamless Redundancy Protocol (HSR Protocol) unterstützt Ringstrukturen.

Beide Protokolle (PRP, HSR) haben gemeinsam, dass hochverfügbare zeitkritische Daten von einer ersten Endstation (dupliziert und) über unterschiedliche Neuzugänge ins Datennetz eingespeist werden, und dann parallel über disjunkte Datenpfade im Datennetz zu einer zweiten Endstation übertragen werden. An der zweiten Endstation oder an einem Auskoppler werden Duplikate (d.h. redundante Pakete) ausgefiltert. Mittels der Übertragung von hochverfügbaren und zeitkritischen Datenpaketen über disjunkte parallele Datenpfade wird eine stoßfreie Redundanz (seamless redundancy) durch das Medium sichergestellt. Dies bedeutet, dass nach einer Unterbrechung (einem vorübergehenden Ausfall) eines der Datenpfade (oder der Netzwerkknoten) keine Rekonfigurationszeit benötigt wird. Auch nach einem Beheben einer Unterbrechung eines der Datenpfade wird keine Rekonfigurationszeit benötigt. Zwei Datenpfade sind zueinander disjunkt, wenn sie keine gemeinsamen Übertragungsstrecken besitzen.

PRP setzt zwei voneinander getrennte Datennetze voraus, die nicht über Netzwerkkoppler (beispielsweise Bridges) miteinander verbunden werden dürfen.

HSR hat ein ähnliches Problem, wenn Ringe über Netzwerkkoppler verbunden werden. Werden beispielsweise am Ringkoppler die Anschlüsse versehentlich vertauscht, können die zwei Ringe zu einen großem Ring verschmelzen. Außerdem sieht weder das HSR-Protokoll noch das PRP-Protokoll einen Überlastschutz vor.

Um eine Ringtrennung (wie sie für HSR notwendig ist) beziehungsweise eine Datennetztrennung (wie sie für PRP notwendig ist) zu garantieren, werden Aufbaurichtlinien erlassen. Damit wird allerdings nicht (in technischer, intrinsischer Weise) sichergestellt, dass solche Aufbaurichtlinien auch eingehalten werden. Es ist allerdings bekannt, eine Einhaltung von Aufbaurichtlinien mit Datennetz-Monitoring zu überwachen.

Die Notwendigkeit eines netzeigenen Überlastschutz wird heute durch eine sorgfältige Projektierung vermieden, indem zu erwartendes Datenverkehrsaufkommen ermittelt wird und mittels organisatorischer Maßnahmen dafür gesorgt wird, dass Netzwerkknoten, die in der Netzwerkplanung nicht vorsehen sind, nicht angeschlossen werden. So projektierte Datennetze werden auch als 'engineered networks' bezeichnet. Ein Nachteil dieses Vorgehens besteht darin, dass das zu erwartende Datenverkehrsaufkommen im Datennetz bekannt sein muss. Hierdurch wird eine Skalierbarkeit von solchen Datennetzen erschwert.

Der Erfindung liegt die Aufgabe zugrunde, eine Steuerungsvorrichtung, einen Netzwerkknoten und ein Verfahren zum Austausch von Daten über ein Datennetz bereitzustellen, mit dem ein Aufwand zur Erstellung und Einhaltung von Aufbaurichtlinien verringert wird, ohne auf stoßfreie Redundanz mit Überlastschutz zu verzichten.

Erfindungsgemäß wird diese Aufgabe dadurch gelöst, dass eine Steuerungsvorrichtung folgende Vorrichtungen umfasst: eine Vorrichtung zum Ermitteln mindestens eines primären Datenpfads zwischen einer ersten und einer zweiten Datenendeinrichtung, die an ein Datennetz angeschlossen sind, eine Vorrichtung zum Auswählen eines der ermittelten primären Datenpfade, eine Vorrichtung zum Ermitteln mindestens eines alternativen Datenpfads zwischen der ersten und der zweiten Datenendeinrichtung, der zu dem ausgewählten primären Datenpfad keine gemeinsamen Übertragungsstrecken aufweist . Der primäre Datenpfad ist zur Übertragung von hochverfügbaren, zeitkritischen Nachrichten zwischen einer ersten und einer zweiten Datenendeinrichtung unter Berücksichtigung einer Verkehrslast vorgesehen, wobei hochverfügbarer, zeitkritischer Datenverkehr von solchem Datenverkehr getrennt wird, dessen Bedienung von einer aktuellen Verfügbarkeit von Datenübertragungsressourcen abhängen darf. Auch der alternative Datenpfad ist zur Übertragung der hochverfügbaren, zeitkritischen Nachrichten unter Berücksichtigung einer Verkehrslast vorgesehen.

Der erfindungsgemäße Netzwerkknoten umfasst eine erfindungsgemäße Steuerungsvorrichtung.

Entsprechend umfasst das erfindungsgemäße Verfahren zum Austausch von hochverfügbaren, zeitkritischen Nachrichten über ein Datennetz, an dem eine erste und eine zweite Datenendeinrichtung angeschlossen ist, folgende Schritte: Trennen von hochverfügbarem, zeitkritischen Datenverkehr von solchem Datenverkehr, dessen Bedienung von einer aktuellen Verfügbarkeit von Datenübertragungsressourcen abhängen darf; Ermitteln mindestens eines primären Datenpfads zwischen der ersten und der zweiten Datenendeinrichtung; Auswählen eines der ermittelten primären Datenpfade; Übertragen einer der hochverfügbaren, zeitkritischen Nachrichten von der ersten Datenendeinrichtung zu der zweiten Datenendeinrichtung über den ausgewählten primären Datenpfad; Ermitteln mindestens eines alternativen Datenpfads zwischen der ersten und der zweiten Datenendeinrichtung, der zu dem ausgewählten primären Datenpfad keine gemeinsamen Übertragungsstrecken aufweist; Übertragen der einen hochverfügbaren, zeitkritischen Nachricht von der ersten Datenendeinrichtung zu der zweiten Datenendeinrichtung über mindestens einen der ermittelten alternativen Datenpfade. Hierbei weist das Datennetz eine Vielzahl von Netzwerkknoten auf, wobei Netzwerkknoten einer Vielzahl von Paaren der Netzwerkknoten jeweils mittels mindestens einer Übertragungsstrecke verbunden sind. Die Verfahrensschritte können auch in einer beliebigen anderen Reihenfolge durchgeführt werden, solange für den jeweiligen Schritt seine Voraussetzungen jeweils zuvor erfüllt sind. Beispielsweise setzt der Schritt des Übertragens einer Nachricht über den ausgewählten primären Datenpfad ein vorheriges Ermitteln eines primären Datenpfads voraus. Der primäre Datenpfad ist zur Übertragung der hochverfügbaren, zeitkritischen Nachrichten unter Berücksichtigung einer Verkehrslast vorgesehen. Auch der alternative Datenpfad ist zur Übertragung der hochverfügbaren, zeitkritischen Nachrichten unter Berücksichtigung einer Verkehrslast vorgesehen.

Ein Konzept der vorliegenden Erfindung kann darin gesehen werden, dass zusätzlich zu dem primären Datenpfad mindestens ein alternativer Datenpfad zwischen der ersten und der zweiten Datenendeinrichtung ermittelt wird, der zu dem ausgewähltten primären Datenpfad keine gemeinsamen Übertragungsstrecken aufweist.

Eine Weiterbildung der Steuerungsvorrichtung sieht vor, dass die Steuerungsvorrichtung auch eine Vorrichtung zum Auswählen mindestens eines der ermittelten alternativen Datenpfade umfasst. Hierdurch kann erreicht werden, dass von mehreren möglichen alternativen Datenpfaden ein alternativer Datenpfad verwendet wird, der (gemessen an einem oder mehreren vorbestimmten Auswahlkriterien) zur Herstellung einer stoßfreien Redundanz am besten geeignet ist.

Entsprechend sieht eine Weiterbildung des Verfahrens vor, dass das Verfahren nach dem Ermitteln mindestens eines alternativen Datenpfads und vor dem Übertragen der einen hochverfügbaren, zeitkritischen Nachricht auch einen Schritt eines Auswählens mindestens eines der ermittelten alternativen Datenpfade umfasst und dass das Übertragen der einen hochverfügbaren, zeitkritischen Nachricht von der ersten Datenendeinrichtung zu der zweiten Datenendeinrichtung über den oder die ausgewählten alternativen Datenpfade erfolgt. Hierdurch kann erreicht werden, dass die zu übertragende Nachricht über denjenigen (beziehungsweise diejenigen) von mehreren möglichen alternativen Datenpfaden übertragen wird, der (beziehungsweise die), gemessen an einem oder mehreren vorbestimmten Auswahlkriterien, zur Herstellung einer stoßfreien Redundanz am besten geeignet ist (beziehungsweise sind).

Eine andere Weiterbildung des Verfahrens sieht vor, dass der primäre Datenpfad mittels eines Schicht-2-Protokolls ermittelt wird und/oder dass die alternativen Datenpfade mittels eines Schicht-2-Protokolls ermittelt werden. Hierdurch erübrigen sich in höheren Protokollschichten grundlegende Vorkehrungen zur Herstellung einer stoßfreien Redundanz.

Eine weitere vorteilhafte Option besteht darin, dass der primäre Datenpfad mittels eines Schicht-2-Protokolls ausgewählt wird und/oder dass der mindestens eine alternative Datenpfad mittels eines Schicht-2-Protokolls ausgewählt wird. Hierdurch erübrigen sich in höheren Protokollschichten Vorkehrungen zur Auswahl der für eine stoßfreie Redundanz benötigten Datenpfade.

Bevorzugt ist, wenn für den ausgewählten primären Datenpfad und/oder für einen ausgewählten alternativen Datenpfad eine Bandbreitenreservierung durchgeführt wird. Hierdurch wird ein Überlastschutz bereitgestellt, der an eine Änderung eines Datenverkehrsaufkommens anpassbar ist.

Außerdem ist es von Vorteil, wenn die Bandbreitenreservierung mittels eines Schicht-2-Protokolls durchgeführt wird. Hierdurch erübrigen sich in höheren Protokollschichten Vorkehrungen zur Anpassung des Datennetzes, zur Anpassung einer Steuerungsvorrichtung des Datennetzes und/oder zur Anpassung eines Datenpfades an eine Änderung eines Datenverkehrsaufkommens.

Die Erfindung ist anhand der beigefügten Zeichnungen näher erläutert, in denen zeigen:
- FIG 1: schematisch einen primären Datenpfad und einen alternativen Datenpfad zwischen einer ersten und einer zweiten Datenendeinrichtung in einem Datennetz;
- FIG 2: schematisch einen Ablauf eines Verfahrens zum Austausch von Daten über ein Datennetz;
- FIG 3: schematisch einen Aufbau einer Steuerungsvorrichtung zur Steuerung eines Austauschs von Daten über ein Datennetz.

Die nachfolgend näher geschilderten Ausführungsbeispiele stellen bevorzugte Ausführungsformen der vorliegenden Erfindung dar.

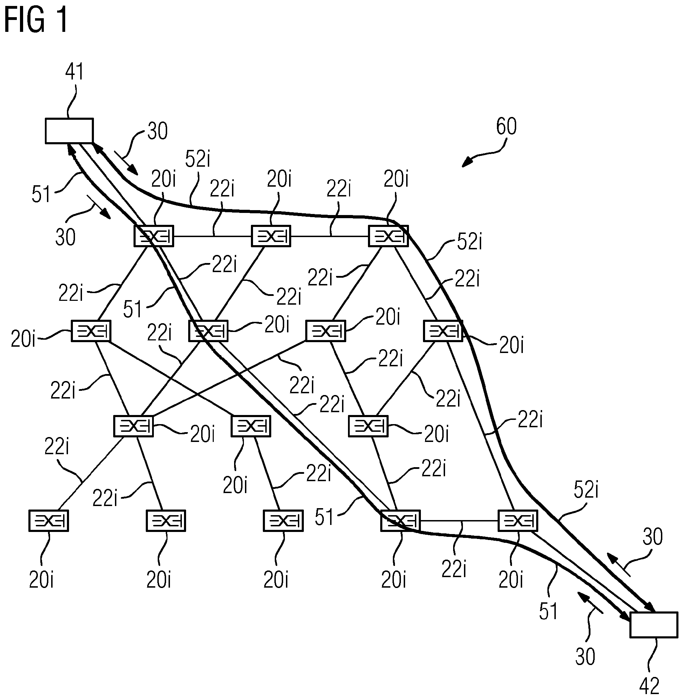

Die FIG 1 zeigt ein Schicht-2-Datennetz 60 mit einer Vielzahl von Audio-Video-Bridges 20i, die jeweils eine Schicht-2-Routing-Funktion aufweisen. Paare der Audio-Video-Bridges 20i sind mittels Übertragungsstrecken 22i (Links 22i) zur Übertragung von Daten 30 (insbesondere von Datenpaketen) verbunden. An einer ersten Audio-Video-Bridge 20i ist eine erste Datenendeinrichtung 41 angeschlossen. Außerdem ist an einer anderen zweiten Audio-Video-Bridge 20i eine zweite Datenendeinrichtung 42 angeschlossen.

Um in dem Datennetz 60 eine nahtlose Redundanz (seamless redundancy) mit einem Ütrerlastschutz unabhängig von der Topologie des Datennetzes 60 sicherzustellen, kann eine Datenübertragung zwischen der ersten Datenendeinrichtung 41 und der zweiten Datenendeinrichtung 42 mit folgenden Merkmalen erfolgen:
1. Trennung von hochverfügbarem, zeitkritischen Datenverkehr von solchem Datenverkehr, dessen Bedienung von einer aktuellen Verfügbarkeit von Datenübertragungsressourcen 20i, 22i abhängen darf.
2. Bandbreitenreservierung mittels eines Bandbreitenreservierungsprotokolls, um einen Überlastschutz bereitzustellen.
3. Ermitteln und Auswählen eines primären Datenpfads 51 und mindestens eines alternativen Datenpfads 52i zur Übertragung von hochverfügbaren, zeitkritischen Datenpaketen 30 im Datennetz 60 unter Berücksichtigung einer Verkehrslast im Datennetz 60.

Ein Datennetz 60, das diese drei Merkmale aufweist, garantiert eine (robuste, medienredundante) Übertragung von Daten. Die Zuverlässigkeit der Übertragung der hochverfügbaren, zeitkritischen Daten 30 (insbesondere Datenpakete) ist weitestmöglich unabhängig von einer tatsächlichen Verkehrslast und/oder deren tatsächlichen Verteilung im Netz.

Die Trennung von hochverfügbarem, zeitkritischen Datenverkehr von Datenverkehr, dessen Bedienung von einer aktuellen Verfügbarkeit von Datenübertragungsressourcen 20i, 22i abhängen darf, kann beispielsweise mittels Übertragung der Daten 30 (insbesondere Datenpakete) der beiden Verkehrsarten mit unterschiedlichen Prioritäten und/oder mittels Übertragung der beiden Verkehrsarten über unterschiedliche virtuelle LAN (VLAN = virtual local area network) erreicht werden (beispielsweise so, wie es im IEEE 802.1Q-Standard beschrieben ist).

Für die Bandbreitenreservierung kann beispielsweise ein sogenanntes engineered network protocol angewendet werden, wie es beispielsweise im IEEE 802.1Q-Standard beschrieben ist.

Das Ermitteln und Auswählen eines primären Datenpfads 51 für hochverfügbare, zeitkritische Daten 30 (insbesondere Datenpakete) unter Berücksichtigung einer Verkehrslast im Datennetz 60 kann mittels eines Schicht-2-Protokolls erfolgten. Ein Protokoll, mit dem das Ermitteln und Auswählen des primären Datenpfads 51 durchgeführt werden kann, ist beispielsweise Shortest Path Bridging (SPB), welches im IEEE 802.1-Standard beschrieben ist. Auch der oder die alternativen Datenpfade 52i können mittels eines Schicht-2-Routing-Protokolls ermittelt und ausgewählt werden. Ein Protokoll, mit dem eine Ermittlung und Auswahl eines primären Datenpfads 51 möglich ist, kann mittels einer fachmännischen Weiterentwicklung dazu erweitert werden, dass zusätzlich auch ein oder mehrere alternative Datenpfade 52i gesucht und ausgewählt werden können.

Durch Kombination der vorgeschlagenen Maßnahmen mit Hilfe eines Routing-Protokolls kann in einem Datennetz 60 Medienredundanz erreicht werden. Durch den Einsatz des Bandbreitenreservierungsprotokolls ist ein Überlastschutz für hochverfügbare zeitkritische Daten 30 (insbesondere Datenpakete) sichergestellt, da Daten 30 nur dann in ein Datennetz 60 eingespeist werden können, wenn dafür ausreichend Bandbreite im Datennetz 60 verfügbar ist. Ein Datennetz 60, das die beschriebenen Voraussetzungen erfüllt, kann von Haus aus Redundanz- und Überlastschutz sicherstellen. Damit können projektspezifische, maßgeschneiderte Maßnahmen, Entwicklungsaufwände und/oder Administrationsaufwände eingespart werden.

Das vorgeschlagene Verfahren 100 zum Austausch von Daten 30 (insbesondere Datenpaketen) über ein Datennetz 60 weist folgende Merkmale auf:
- Hochverfügbare, zeitkritische Echtzeitdaten 30 werden gleichzeitig auf unterschiedlichen (disjunkten) Datenpfaden 51, 52i über voneinander unabhängige, redundante übertragungsstrecken 22i übertragen.
- Die unterschiedlichen (disjunkten) Datenpfade 51, 52i für die hochverfügbaren, zeitkritischen Daten 30 werden zur Laufzeit mittels eines Schicht-2-Routing-Protokolls ermittelt (beispielsweise mittels eines Shortest-Path-Bridging-Protokolls, d.h. mittels eines SPB-Protokolls).

Optional kann das Verfahren 100 zusätzlich eine beliebige echte oder unechte Teilmenge folgender Merkmale aufweisen:
- Trennung von Ressourcen in den Datennetzkomponenten 20i, 22i für einen hochverfügbaren, zeitkritischen Datenverkehr und für andere Verkehrsarten;
- Bandbreitenreservierung für hochverfügbaren, zeitkritischen Datenverkehr;
- Unterstützung von Datenverkehr mit herkömmlichen Kommunikationsprotokollen (beispielsweise mittels TCP/IP, UDP).

Mittels der vorgeschlagenen Maßnahmen können ohne projektspezifische Anpassungen alle drei genannten Arten von Datenverkehr gleichzeitig in einem selben Datennetz 60 übertragen werden.

Die Realisierung kann mittels Ethernet-Technologien unter Anwendung von Mechanismen für Audio-Video-Bridging und/oder unter Verwendung von Mechanismen für "High-availability Seamless Redundancy" erfolgen.

Die hier vorgeschlagenen Konzepte eignen sich beispielsweise für den Aufbau von Datennetzen 60 in Automations-, Medizin-, Transport- oder Verkehrsanwendungen. Ein Industriestandard, der sich grundsätzlich in der beschrieben Weise weiterbilden lässt, ist PROFI NET^{®} von Siemens^{®}.

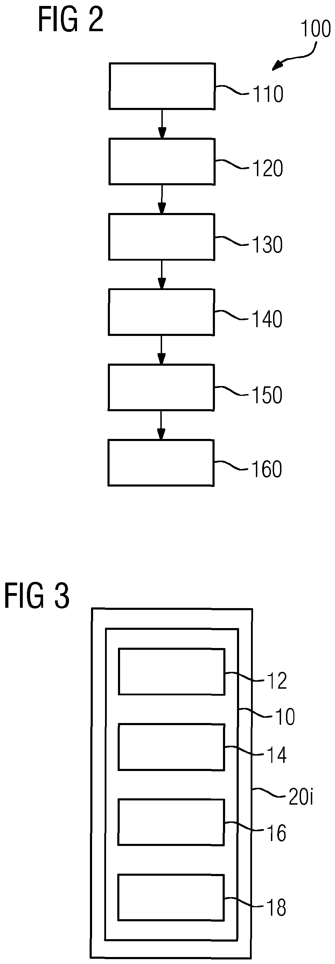

Die FIG 2 zeigt ein Verfahren 100 zum Austausch von Daten 30 (insbesondere Datenpaketen) über ein Datennetz 60, an dem eine erste 41 und eine zweite 42 Datenendeinrichtung angeschlossen ist, wobei das Datennetz 60 eine Vielzahl von Netzwerkknoten 20i aufweist und Netzwerkknoten 20i einer Vielzahl von Paaren der Netzwerkknoten 20i jeweils mittels mindestens einer Übertragungsstrecke 22i verbunden sind. In einem ersten Schritt 110 wird mindestens ein primärer Datenpfad 51 zwischen der ersten 41 und der zweiten 42 Datenendeinrichtung ermittelt. In einem zweiten Schritt 120 wird einer der ermittelten primären Datenpfade 51 ausgewählt. In einem dritten Schritt 130 wird eine Nachricht 30 von der ersten Datenendeinrichtung 41 zu der zweiten Datenendeinrichtung 42 über den ausgewählten primären Datenpfad 51 übertragen. In einem vierten Schritt 140 wird mindestens ein alternativer Datenpfad 52i zwischen der ersten 41 und der zweiten 42 Datenendeinrichtung ermittelt, der zu dem ausgewählten primären Datenpfad 51 keine gemeinsamen Übertragungsstrecken 22i aufweist. In einem fünften Schritt 150 wird mindestens einer der ermittelten alternativen Datenpfade 52i ausgewählt. In einem sechsten Schritt 160 wird die Nachricht 30 von der ersten Datenendeinrichtung 41 zu der zweiten Datenendeinrichtung 42 über den oder die ausgewählten alternativen Datenpfade 52i übertragen.

Die FIG 3 zeigt einen Netzwerkknoten 20i und eine Steuerungsvorrichtung 10, die eine Vorrichtung 12 zum Ermitteln mindestens eines primären Datenpfads 51 zwischen einer ersten 41 und einer zweiten 42 Datenendeinrichtung, die an ein Datennetz 60 angeschlossen sind, umfasst. Außerdem umfasst die Steuerungsvorrichtung 10 eine Vorrichtung 14 zum Auswählen eines der ermittelten primären Datenpfade 51 und eine Vorrichtung 16 zum Ermitteln mindestens eines alternativen Datenpfads 52i zwischen der ersten 41 und der zweiten 42 Datenendeinrichtung, der zu dem ausgewählten primären Datenpfad 51 keine gemeinsamen Übertragungsstrecken aufweist.

Eine Weiterbildung des Netzwerkknotens 20i umfasst eine Vorrichtung 18 zum Auswählen mindestens eines der ermittelten alternativen Datenpfade 52i.

Obwohl die Erfindung im Detail durch bevorzugte Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

### Bezugszeichenliste

- 10: Steuerungsvorrichtung
- 12: Vorrichtung zum Ermitteln mindestens eines primären Datenpfads
- 14: Vorrichtung zum Auswählen eines der ermittelten primären Datenpfade
- 16: Vorrichtung zum Ermitteln mindestens eines alternativen Datenpfads
- 18: Vorrichtung zum Auswählen mindestens eines der ermittelten alternativen Datenpfade
- 20i: Netzwerkknoten; Audio-Video-Bridge
- 22i: Übertragungsstrecke; Link
- 30: Nachricht; Daten; Datenpakete
- 41: erste Datenendeinrichtung
- 42: zweite Datenendeinrichtung
- 51: primärer Datenpfad
- 52i: alternativer Datenpfad
- 60: Datennetz; Schicht-2-Datennetz
- 100: Verfahren zum Austausch von Daten
- 110: Ermitteln mindestens eines primären Datenpfads
- 120: Auswählen eines der ermittelten primären Datenpfade
- 130: Übertragen einer Nachricht von der ersten Datenendeinrichtung zu der zweiten Datenendeinrichtung über den ausgewählten primären Datenpfad
- 140: Ermitteln mindestens eines alternativen Datenpfads zwischen der ersten und der zweiten Datenendeinrichtung
- 150: Auswählen mindestens eines der ermittelten alternativen Datenpfade
- 160: Übertragen der Nachricht von der ersten Datenendeinrichtung zu der zweiten Datenendeinrichtung über den oder die ausgewählten alternativen Datenpfaden.

## Patentansprüche

1. Steuerungsvorrichtung (10), wobei die Steuerungsvorrichtung (10) umfasst:
- eine Vorrichtung (12) zum Ermitteln mindestens eines primären Datenpfads (51) zur Übertragung von hochverfügbaren, zeitkritischen Nachrichten (30) zwischen einer ersten (21) und einer zweiten (22i) Datenendeinrichtung, die an ein Datennetz (60) angeschlossen sind, unter Berücksichtigung einer Verkehrslast, wobei hochverfügbarer, zeitkritischer Datenverkehr von solchem Datenverkehr getrennt wird, dessen Bedienung von einer aktuellen Verfügbarkeit von Datenübertragungsressourcen (20i, 22i) abhängen darf;
- eine Vorrichtung (14) zum Auswählen eines der ermittelten primären Datenpfade (51); und
- eine Vorrichtung (16) zum Ermitteln mindestens eines alternativen Datenpfads (52i) zur Übertragung der hochverfügbaren, zeitkritischen Nachrichten (30) zwischen der ersten (41) und der zweiten (42) Datenendeinrichtung unter Berücksichtigung einer Verkehrslast, der zu dem ausgewähltten primären Datenpfad (51) keine gemeinsamen Übertragungsstrecken aufweist.

2. Steuerungsvorrichtung (10) nach Anspruch 1,
**dadurch gekennzeichnet, dass**
die Steuerungsvorrichtung (10) eine Vorrichtung (18) zum Auswählen mindestens eines der ermittelten alternativen Datenpfade (52i) umfasst.

3. Netzwerkknoten (20i),
**dadurch gekennzeichnet, dass**
der Netzwerkknoten (20i) eine Steuerungsvorrichtung (10) nach Anspruch 1 oder 2 umfasst.

4. Verfahren (100) zum Austausch von hochverfügbaren, zeitkritischen Nachrichten (30) über ein Datennetz (60), an dem eine erste (41) und eine zweite (42) Datenendeinrichtung angeschlossen ist, wobei das Datennetz (60) eine Vielzahl von Netzwerkknoten (20i) aufweist und Netzwerkknoten (20i) einer Vielzahl von Paaren der Netzwerkknoten (20i) jeweils mittels mindestens einer Übertragungsstrecke (22i) verbunden sind, wobei das Verfahren (100) folgende Schritte umfasst:
- Trennen von hochverfügbarem, zeitkritischen Datenverkehr von solchem Datenverkehr, dessen Bedienung von einer aktuellen Verfügbarkeit von Datenübertragungsressourcen (20i, 22i) abhängen darf;
- Ermitteln (110) mindestens eines primären Datenpfads (51) zur Übertragung der hochverfügbaren, zeitkritischen Nachrichten (30) zwischen der ersten (41) und der zweiten (42) Datenendeinrichtung unter Berücksichtigung einer Verkehrslast;
- Auswählen (120) eines der ermittelten primären Datenpfade (51);
- Übertragen (130) einer der hochverfügbaren, zeitkritischen Nachrichten (30) von der ersten Datenendeinrichtung (41) zu der zweiten Datenendeinrichtung (42) über den ausgewählten primären Datenpfad (51);
- Ermitteln (140) mindestens eines alternativen Datenpfads (52i) zur Übertragung der hochverfügbaren, zeitkritischen Nachrichten (30) zwischen der ersten (41) und der zweiten (42) Datenendeinrichtung unter Berücksichtigung einer Verkehrslast, wobei der alternative Datenpfad (52i) zu dem ausgewählten primären Datenpfad (51) keine gemeinsamen Übertragungsstrecken (22i) aufweist;
- Übertragen (160) der einen hochverfügbaren, zeitkritischen Nachricht (30) von der ersten Datenendeinrichtung (41) zu der zweiten Datenendeinrichtung (42) über mindestens einen der ermittelten alternativen Datenpfade (52i).

5. Verfahren (100) nach Anspruch 4, **dadurch gekennzeichnet, dass** das Verfahren nach dem Ermitteln (140) mindestens eines alternativen Datenpfads (52i) und vor dem Übertragen (160) der einen hochverfügbaren, zeitkritischen Nachricht (30) auch einen Schritt eines Auswählens (150) mindestens eines der ermittelten alternative Datenpfade (52i) umfasst und dass das Übertragen (160) der einen hochverfügbaren, zeitkritischen Nachricht (30) von der ersten Datenendeinrichtung (41) zu der zweiten Datenendeinrichtung (42) über den oder die ausgewählten alternativen Datenpfade (52i) erfolgt.

6. Verfahren (100) nach Anspruch 4 oder 5, **dadurch gekennzeichnet, dass** der primäre Datenpfad (51) mittels eines Schicht-2-Protokolls ermittelt wird und/oder dass die alternativen Datenpfade (52i) mittels eines Schicht-2-Protokolls ermittelt werden.

7. Verfahren (100) nach einem der Ansprüche 4 bis 6, **dadurch gekennzeichnet, dass** der primäre Datenpfad (51) mittels eines Schicht-2-Protokolls ausgewählt wird und/oder dass der mindestens eine alternative Datenpfad (52i) mittels eines Schicht-2-Protokolls ausgewählt wird.

8. Verfahren (100) nach einem der Ansprüche 4 bis 7, **dadurch gekennzeichnet, dass** für den ausgewählten primären Datenpfad (51) und/oder für einen ausgewählten alternativen Datenpfad (52i) eine Bandbreitenreservierung durchgeführt wird.

9. Verfahren (100) nach einem der Ansprüche 4 bis 8, **dadurch gekennzeichnet, dass** die Bandbreitenreservierung mittels eines Schicht-2-Protokolls durchgeführt wird.

## Claims

1. Control apparatus (10), wherein the control apparatus (10) comprises:
- an apparatus (12) for ascertaining at least one primary data path (51) for transmitting high-availability, time-critical messages (30) between a first (21) and a second (22i) data terminal device that are connected to a data network (60), taking account of a traffic load, wherein high-availability, time-critical data traffic is separated from data traffic whose control can be dependent on a current availability of data transmission resources (20i, 22i) ;
- an apparatus (14) for selecting one of the ascertained primary data paths (51); and
- an apparatus (16) for ascertaining at least one alternative data path (52i) for transmitting the high-availability, time-critical messages (30) between the first (41) and the second (42) data terminal device taking account of a traffic load, which at least one alternative data path has no shared transmission links with the selected primary data path (51).

2. Control apparatus (10) according to Claim 1,
**characterized in that**
the control apparatus (10) comprises an apparatus (18) for selecting at least one of the ascertained alternative data paths (52i).

3. Network node (20i),
**characterized in that**
the network node (20i) comprises a control apparatus (10) according to Claim 1 or 2.

4. Method (100) for interchanging high-availability, time-critical messages (30) via a data network (60) to which a first (41) and a second (42) data terminal device are connected, wherein the data network (60) has a multiplicity of network nodes (20i) and network nodes (20i) in a multiplicity of pairs of the network nodes (20i) are respectively connected by means of at least one transmission link (22i), wherein the method (100) comprises the following steps:
- separation of high-availability, time-critical data traffic from data traffic whose control can be dependent on a current availability of data transmission resources (20i, 22i) ;
- ascertainment (110) of at least one primary data path (51) for transmitting the high-availability, time-critical messages (30) between the first (41) and the second (42) data terminal device taking account of a traffic load;
- selection (120) of one of the ascertained primary data paths (51);
- transmission (130) of one of the high-availability, time-critical messages (30) from the first data terminal device (41) to the second data terminal device (42) via the selected primary data path (51);
- ascertainment (140) of at least one alternative data path (52i) for transmitting the high-availability, time-critical messages (30) between the first (41) and the second (42) data terminal device taking account of a traffic load, wherein the alternative data path (52i) has no shared transmission links (22i) with the selected primary data path (51);
- transmission (160) of the one high-availability, time-critical message (30) from the first data terminal device (41) to the second data terminal device (42) via at least one of the ascertained alternative data paths (52i).

5. Method (100) according to Claim 4, **characterized in that** the method also comprises, after the ascertainment (140) of at least one alternative data path (52i) and before the transmission (160) of the one high-availability, time-critical message (30), a step of selection (150) of at least one of the ascertained alternative data paths (52i) and **in that** the transmission (160) of the one high-availability, time-critical message (30) from the first data terminal device (41) to the second data terminal device (42) is effected via the selected alternative data path(s) (52i).

6. Method (100) according to Claim 4 or 5, **characterized in that** the primary data path (51) is ascertained by means of a layer 2 protocol and/or **in that** the alternative data paths (52i) are ascertained by means of a layer 2 protocol.

7. Method (100) according to one of Claims 4 to 6, **characterized in that** the primary data path (51) is selected by means of a layer 2 protocol and/or **in that** the at least one alternative data path (52i) is selected by means of a layer 2 protocol.

8. Method (100) according to one of Claims 4 to 7, **characterized in that** a bandwidth reservation is performed for the selected primary data path (51) and/or for a selected alternative data path (52i).

9. Method (100) according to one of Claims 4 to 8, **characterized in that** the bandwidth reservation is performed by means of a layer 2 protocol.

## Revendications

1. Dispositif de commande (10), le dispositif de commande (10) comprenant :
- un dispositif (12) pour déterminer au moins un chemin de données primaire (51) pour la transmission de messages (30) critiques dans le temps de haute disponibilité entre un premier (21) et un deuxième (22i) équipement terminal de données, qui sont raccordés à un réseau de données (60), en tenant compte d'une charge de trafic, un trafic de données critique dans le temps de haute disponibilité étant séparé d'un trafic de données dont la commande peut dépendre d'une disponibilité actuelle de ressources de transmission de données (20i, 22i) ;
- un dispositif (14) pour sélectionner un des chemins de données primaires (51) déterminés ; et
- un dispositif (16) pour déterminer au moins un chemin de données alternatif (52i) pour la transmission des messages (30) critiques dans le temps de haute disponibilité entre le premier (41) et le deuxième (42) équipement terminal de données en tenant compte d'une charge de trafic, qui n'a pas de voies de transmission communes avec le chemin de données primaire (51) sélectionné.

2. Dispositif de commande (10) selon la revendication 1,
**caractérisé en ce que**
le dispositif de commande (10) comprend un dispositif (18) pour sélectionner au moins un des chemins de données alternatifs (52i) déterminés.

3. Noeud de réseau (20i),
**caractérisé en ce que**
le noeud de réseau (20i) comprend un dispositif de commande (10) selon la revendication 1 ou 2.

4. Procédé (100) d'échange de messages (30) critiques dans le temps de haute disponibilité via un réseau de données (60) auquel sont raccordés un premier (41) et un deuxième (42) équipement terminal de données, le réseau de données (60) comportant une pluralité de noeuds de réseau (20i) et des noeuds de réseau (20i) d'une pluralité de paires de noeuds de réseau (20i) étant reliés chaque fois au moyen d'au moins une voie de transmission (22i), le procédé (100) comprenant les étapes suivantes :
- séparation d'un trafic de données critique dans le temps de haute disponibilité d'un trafic de données dont la commande peut dépendre d'une disponibilité actuelle de ressources de transmission de données (20i, 22i) ;
- détermination (110) d'au moins un chemin de données primaire (51) pour la transmission des messages (30) critiques dans le temps de haute disponibilité entre le premier (41) et le deuxième (42) équipement terminal de données en tenant compte d'une charge de trafic ;
- sélection (120) d'un des chemins de données primaires (51) déterminés ;
- transmission (130) d'un des messages (30) critiques dans le temps de haute disponibilité du premier équipement terminal de données (41) au deuxième équipement terminal de données (42) via le chemin de données primaire (51) sélectionné ;
- détermination (140) d'au moins un chemin de données alternatif (52i) pour la transmission des messages (30) critiques dans le temps de haute disponibilité entre le premier (41) et le deuxième (42) équipement terminal de données en tenant compte d'une charge de trafic, le chemin de données alternatif (52i) n'ayant pas de voies de transmission (22i) communes avec le chemin de données primaire (51) sélectionné ;
- transmission (160) dudit un message (30) critique dans le temps de haute disponibilité du premier équipement terminal de données (41) au deuxième (42) équipement terminal de données via au moins un des chemins de données alternatifs (52i) sélectionné.

5. Procédé (100) selon la revendication 4, **caractérisé en ce que** le procédé comprend, après la détermination (140) dudit au moins un chemin de données alternatif (52i) et avant la transmission (160) dudit un message (30) critique dans le temps de haute disponibilité, également une étape de sélection (150) d'au moins un des chemins de données alternatifs (52i) déterminés et **en ce que** la transmission (160) dudit un message (30) critique dans le temps de haute disponibilité du premier équipement terminal de données (41) au deuxième équipement terminal de données (42) s'effectue via le ou les chemins de données alternatifs (52i) sélectionnés.

6. Procédé (100) selon la revendication 4 ou 5, **caractérisé en ce que** le chemin de données primaire (51) est déterminé au moyen d'un protocole de couche 2 et/ou **en ce que** les chemins de données alternatifs (52i) sont déterminés au moyen d'un protocole de couche 2.

7. Procédé (100) selon l'une des revendications 4 à 6, **caractérisé en ce que** le chemin de données primaire (51) est sélectionné au moyen d'un protocole de couche 2 et/ou **en ce que** le au moins un chemin de données alternatif (52i) est sélectionné au moyen d'un protocole de couche 2.

8. Procédé (100) selon l'une des revendications 4 à 7, **caractérisé en ce qu'**une réservation de bande passante est effectuée pour le chemin de données primaire (51) sélectionné et/ou pour un chemin de données alternatif (52i) sélectionné.

9. Procédé (100) selon l'une des revendications 4 à 8, **caractérisé en ce que** la réservation de bande passante est effectuée au moyen d'un protocole de couche 2.
